# EUROPÄISCHE PATENTSCHRIFT

(11) **EP 2 178 987 B1**
(45) Veröffentlichungstag und Bekanntmachung des Hinweises auf die Patenterteilung: **14.03.2012**
(21) Anmeldenummer: 08801132.5
(22) Anmeldetag: 12.08.2008
(51) Int. Cl.: C09D 1/00, C09D 5/10, C09D 7/12, B62D 27/00, B62D 29/04, B62D 65/06

(54) **VERFAHREN ZUM KORROSIONSSCHUTZ VON KAROSSERIE-, FAHRWERKS-, MOTORBAUTEILEN ODER ABGASANLAGEN**
PROCESS FOR PROTECTING VEHICLE BODY COMPONENTS, CHASSIS COMPONENTS, ENGINE COMPONENTS OR EXHAUST SYSTEMS FROM CORROSION
PROCÉDÉ POUR PROTÉGER CONTRE LA CORROSION LES COMPOSANTS DE CARROSSERIE, DE CHÂSSIS ET DE MOTEUR OU LES SYSTÈMES D'ÉCHAPPEMENT

(30) Priorität: 13.08.2007 DE 102007038214
(43) Veröffentlichungstag der Anmeldung: 28.04.2010
(73) Patentinhaber: NANO-X GmbH, 66130 Saarbrücken (DE); Volkswagen Aktiengesellschaft, 38436 Wolfsburg (DE)
(72) Erfinder: SEPEUR, Stefan, 66787 Wadgassen (DE); GOEDICKE, Stefan, 66540 Neunkirchen (DE); PAAR, Uwe, 34128 Kassel (DE)
(74) Vertreter: Vièl, Christof
(86) Internationale Anmeldenummer: PCT/DE2008/001299
(87) Internationale Veröffentlichungsnummer: WO 2009/021490

(56) Entgegenhaltungen:
- WO-A-2006/050688
- DE-A1- 4 410 692
- DE-A1-102005 059 614
- DE-U1-202004 008 504
- JP-A- 58 119 382

## Beschreibung

Die Erfindung betrifft ein Verfahren zum Korrosionsschutz von Karosserie-, Fahrwerks-, Motorbauteilen oder Abgasanlagen aus Stahl.

Zum Korrosionsschutz von Karosseriebauteilen werden heute üblicherweise feuerverzinkte Bleche verwendet. Diese bieten den Vorteil eines aktiven Korrosionsschutzes. Nachteilig ist ein fehlender Kantenschutz beim Zuschneiden solcher Bleche. Weiterhin entstehen durch Schweißprozesse Fehlstellen, an denen ein ungenügender Korrosionsschutz besteht. Durch das Verschweißen verschieden beschichteter Stähle, wie beispielsweise ein feueraluminiertes Stahlbauteile und ein verzinktes Blech, kann es auch zu Kontaktkorrosionsproblemen aufgrund der unterschiedlichen Standardpotentiale von Zink und Aluminium kommen.

Bei der Herstellung hochfester Stahlbauteile, wie sie beispielsweise als tragende Karosserieteile im Fahrzeugbau eingesetzt werden, kommen zunehmend Warmumformverfahren zum Einsatz. Eine bestimmte Variante der Warmumformung ist das sogenannte Formhärten oder Preßhärten, bei dem Spezialstähle (meist Mangan-Bor-Stähle) auf Austenitisierungstemperatur erwärmt, umgeformt und im Umformwerkzeug abgeschreckt werden. Dabei entsteht eine mechanisch hochfeste martensitische Gefügestruktur, welche es ermöglicht, durch geringe Materialstärke leichte und dennoch hochfeste Bauteile herzustellen. Die Austenitisierung findet bei Temperaturen oberhalb 850°C statt. Bei dieser Temperatur findet eine starke Zunderbildung auf der Stahloberfläche statt. Diese Zunderbildung erfolgt so schnell, daß selbst Teile, die unter Schutzgasatmosphäre erwärmt werden, z.B. in einem Durchlaufofen, verzundern, sobald sie bei der Überführung vom Ofen in die Preßform mit Luftsauerstoff in Kontakt kommen. Bei den Umformlinien, die für die Stückzahlen einer Fahrzeugproduktion ausgelegt sind, ist es mit vertretbarem wirtschaftlichen und konstruktiven Aufwand nicht möglich, den gesamten Bereich von Erwärmung bis Umformung unter Schutzgas zu betreiben.

Der sich bildende Zunder neigt zum Abplatzen und ist rauh und spröde. Er beschädigt daher Bauteile sowie Umformwerkzeuge und muß nach dem Formhärten beispielsweise durch Strahlen mit hohem Aufwand vom Bauteil entfernt werden. Durch regelmäßig notwendige Reinigung der Werkzeuge werden die Taktzeiten stark erhöht und der Materialabtrag beim Strahlen muß durch die Verwendung höherer Blechstärken kompensiert werden. In den meisten Fällen werden daher beim Formhärten Stahlbleche eingesetzt, die mit einer Schutzschicht gegen Zunderbildung versehen sind.

Feuerverzinkte Stahlbleche eignen sich nur bedingt zum Presshärten bzw. zum Schutz vor Zunderbildung. Bei feuerverzinkten Stahlblechen wird durch das Preßhärten die Verzinkung beschädigt, so dass ein aktiver Korrosionsschutz nicht oder nur noch unzureichend vorliegt

Aus der EP 1 013 785 A1 ist hierbei die Verwendung feueraluminierter Stahlsorten bekannt. Diese werden im Schmelztauchverfahren mit einer ca. 20-30 µm dicken Al-Si-Legierung überzogen. Dieser Al-Si-Überzug bietet zwar bei der Lagerung der feueraluminierten Stahlbleche einen gewissen Korrosionsschutz, so daß diese Bleche bzw. Coils bei Lagerung und Transport nicht beölt werden müssen nach dem bei der Warmumformung verwendeten Glühprozeß ist die Korrosionsschutzwirkung des Überzugs allerdings sehr stark reduziert. Dies wird beispielsweise deutlich, wenn bei 950°C geglühte feueraluminierte Stahlbleche im Salzsprühnebeltest nach DIN 50021 untersucht werden. Hier ist bereits nach wenigen Tagen die Bildung von Rotrost auf der gesamten Fläche zu erkennen. Die entsprechenden Teile können nach Zusammenfügen und Phosphatieren der gesamten Karosserie auch kataphoretisch tauchlackiert (KTL-beschichtet) werden und verfügen dann über einen ausreichenden Korrosionsschutz für die Verwendung in bestimmten Bereichen. Wird die KTL-Beschichtung jedoch beschädigt, ist kein ausreichender aktiver Korrosionsschutz mehr gewährleistet. Der elektrische Widerstand feueraluminierter Bleche liegt nach dem Härtungsprozeß unter üblichen Bedingungen beim direkten Presshärten im Bereich < 1 mOhm.

Ein weiterer Verzunderungsschutz, der in der WO 2006/040030 A1 beschrieben wird, basiert auf der naßchemischen Beschichtung eines Stahlblechs oder -coils mit einem Lack bestehend aus einem siliziumorganischen Bindemittel, Aluminiumpartikeln sowie Festschmierstoffen. Dieser kann kalt und warm umgeformt werden und schützt bei der Warmumformung vor Verzunderung. Die anorganische Reaktionsschicht wird nach der Warmumformung bzw. dem Formhärten durch Strahlen entfernt, wobei der hierfür notwendige Energie- und Zeitaufwand deutlich niedriger als beim. Entfernen von Zunder ist. Das Abstrahlen geschieht deshalb, weil die Reaktionsschicht für das anschließende Widerstandspunktschweißen nicht die notwendige elektrische Leitfähigkeit aufweist. Nach dem Verschweißen der metallisch blanken Stahlbleche werden auch diese phosphatiert und KTL-beschichtet.

Eine Weiterentwicklung der beschriebenen naßchemischen Verzunderungsschutzschicht, die Gegenstand der WO 2007/076766 A2 ist, besitzt nach dem Formhärten die für das Widerstandspunktschweißen und die KTL-Beschichtung notwendige elektrische Leitfähigkeit und kann somit nach dem Formhärten auf dem Bauteil verbleiben. Der elektrische Widerstand dieser Bleche liegt nach dem Härtungsprozess unter üblichen Bedingungen beim Presshärten im Bereich < 5 mOhm. Soll das Bauteil nachfolgend einem Schweißvorgang, insbesondere einem Widerstandspunktschweißen, oder einer KTL-Beschichtung unterzogen werden, ist die Einhaltung von Prozeßparametern, die beim Glühen des mit Verzunderungsschutz beschichteten Stahlblechs zur Ausbildung von elektrisch leitfähigen Reaktionsschichten führen, von besonderer Bedeutung. Als vorteilhaft hat sich die Verwendung einer Schutzgasatmosphäre (z.B. Stickstoff, Argon) oder die Verwendung einer Ofenatmosphäre mit reduziertem Sauerstoffgehalt (0-10 %) erwiesen. Ebenfalls führen kurze Aufheizzeiten zu einer hohen elektrischen Leitfähigkeit und damit geringem elektrischen Widerstand im Bereich < 3 mOhm und fördern somit die Schweißbarkeit. Die entsprechenden Teile besitzen nach Schweißen, Phosphatierung und KTL-Beschichtung einen ausreichenden Korrosionsschutz für die Verwendung in bestimmten Bereichen. Allerdings ist auch hier kein aktiver Korrosionsschutz gegeben, der den Stahl im Falle einer Beschädigung der KTL-Beschichtung schützt.

Ein genereller Vorteil der beschriebenen naßchemischen Verzunderungsschutzschichten gegenüber einer Schmelztauchaluminierung ist, dass bei der Erwärmung auf Austenitisieiungstemperatur keine Diffusionsschicht gebildet werden muß und daher kürzere Taktzeiten gefahren werden können. Außerdem besteht hier nicht die Gefahr des Aufschmelzens bei der Erwärmung, so dass auch induktive oder konduktive Verfahren für die Erwärmung beim Formhärten eingesetzt werden können.

In den Anmeldungen WO 2005/021820 A1, WO 2005/021821 A1 und WO 2005/021822 A1 werden Verfahren zur Herstellung verschiedener gehärteter Stahlteile beschrieben. Dabei wird auf den Stahl jeweils eine Schutzschicht bestehend aus Zink in Verbindung mit einem weiteren sauerstoffaffinen Element (vor allem Aluminium) aufgebracht. Diese Schutzschicht wird in WO 2005/021821 A1 in einem Schmelztauchverfahren, in WO 2005/021820 A1 und WO 2005/021822 A1 in einem Schmelztauch- oder galvanischen Verfahren aufgebracht. Diese Schichten, die als Hauptelement Zink enthalten, sind jedoch bei den für den Formhärteprozeß benötigten Austenitisierungstemperaturen sehr empfindlich gegenüber Oxydation und Abdampfen. Bei den geringsten Verschmutzungen (z.B. Staub) entstehen an der Oberfläche Brandstellen, welche zu Bauteileausschuß führen. Die drei genannten Anmeldungen basieren auf der AT 412878 B ("Korrosionsgeschütztes Stahlblechteil mit hoher Festigkeit"), in der explizit die kathodische Korrosionsschutzwirkung des Überzuges beschrieben wird. In der Praxis verhält es sich allerdings so, dass selbst wenn es gelingt, in einem engen Prozessfenster geeignete Bauteile ohne Beschädigung der Oberfläche zu erhalten, die kathodische Korrosionsschutzwirkung des Zinks nach dem Glühen nicht mehr so wie im ursprünglichen Zustand gegeben ist und die Bauteile durch Eindiffundieren von Eisen aus dem Grundmaterial in die Schicht relativ leicht unter Bildung von Rotrost korrodieren. Das gleiche gilt auch für die in EP 1439240A1 beschriebene Zinkschicht, die durch eine zusätzliche Zinkoxidschicht vor dem Abdampfen unter den Bedingungen der Formhärtung geschützt ist.

Bei Karosseriebauteilen aus Stahl ist ein Teil des Korrosionsschutzes eine Wachsbehandlung, bei der mehrere Kilogramm Wachs auf die Karosseriebauteile bzw. in deren Hohlräume aufgetragen wird, um diesen hydrophobe Eigenschaften zu verleihen.

Aus der DE 44 10 692 A1 ist es bekannt, daß ein durch eine Tauchlackierung vor Korrosion geschütztes Bauteil aus zwei miteinander verbundenen, verzinkten Blechteilen besteht, wobei das eine Blechteil aus zwei durch eine Schweißnaht miteinander verbundenen Blechen gebildet ist und gegen das andere Blechteil anliegt. Im Bereich der Schweißnaht des ersten Blechteiles haben die beiden Blechteile durch einen gegenüber ihrer Anlagefläche zurückspringenden Bereich gegenseitigen Abstand.

Die DE 10 2005 059 614 A1 offenbart ein Verfahren zur Herstellung einer Korrosionsschutzbeschichtung auf Bauteilen aus Stahl, insbesondere Teilen von Kraftfahrzeugen. Die Zusammensetzung des Beschichtungsmaterials umfasst Edelstahlpigmente, metallische Pulver und ein Bindemittel. Das Dokument offenbart auch den Einsatz dieses Beschichtungsmaterials zum Schutz von Metallen vor Korrosion oder Verzunderung während oder nach einer Warmumformung.

Der Erfindung liegt die Aufgabe zugrunde, eine mit herkömmlichen Mitteln (z.B. Tauchen, Spritzen, Fluten, Walzen) im industriellen Maßstab auftragbare aktive Korrosionsschutzbeschichtung für im Karosserie- und Fahrzeugbau üblicherweise verwendeten Stahllegierungen oder mit metallischen Überzügen oder metallpigmenthaltigen Beschichtungen oder mit solchen Beschichtungen zum zwecke des Zunderschutzes versehenen warm umgeformten oder formgehärteten Karosserie- und Motorbauteilen zu entwickeln.

Diese Aufgabe wird erfindungsgemäß durch ein Verfahren gemäß dem Oberbegriff mit folgenden Verfahrensschritten gelöst:
a. Verwendung von im Karosserie- und Fahrzeugbau üblicherweise verwendeten Stahllegierungen oder mit metallischen Überzügen oder metallpigmenthaltigen Beschichtungen oder mit solchen Beschichtungen zum Zwecke des Zunderschutzes versehenen warm umgeformten oder formgehärteten Karosserie-, Fahrwerks-, Motorbauteilen oder Abgasanlagen,
b. Zusammenfügen von mindestens zwei sich in Zusammensetzung, durchlaufenes Verfahren oder Oberflächenbeschichtung unterscheidenden Karosserie-, Fahrwerks-, Motorbauteilen oder Teilen von Abgasanlagen durch übliche Fügeverfahren zu einem Verbund, wobei mindestens eines der zu dem Verbund zusammengefügten Bauteile ein warm umgeformtes oder formgehärtetes Bauteil ist,
c. Aufbringen einer Korrosionsschutzbeschichtung auf den Verbund, wobei die Korrosionsschutzbeschichtung mindestens 10 Gew.-% metallisches Zinkpigment und bis zu 30 Gew.-% metallisches Aluminiumpigment sowie ein Bindemittel aus 5 bis 100 Gew.-% Metalloxiden enthält, naßchemisch mit einer Schichtdicke von weniger als 20 µm auf die beim Glühen aus der Verzunderungsschutzbeschichtung entstehende Reaktionsschicht aufgebracht wird.

Der Erfindung liegt somit die Verwendung von mindestens zwei unterschiedlichen im Karosserie- und Fahrzeugbau üblicherweise verwendeten Stahllegierungen oder mit metallischen Überzügen oder metallpigmenthaltigen Beschichtungen oder mit solchen Beschichtungen zum Zwecke des Zunderschutzes versehenen warm umgeformten oder formgehärteten Karosserie-, Fahrwerks-, Motorbauteilen oder Abgasanlagen, die in einem üblichen Fügeverfahren zu einem Verbund zusammengefügt wurden, zugrunde. Zu den Fahrwerksteilen zählen in diesem Zusammenhang auch Felgen und Räder. Grundsätzlich können alle im Fahrzeugbau zum Einsatz kommenden Bauteile und -gruppen dem erfindungsgemäßen Verfahren unterzogen werden.

Überraschenderweise zeigte sich, daß spezielle Beschichtungszusammensetzungen bestehend aus einem Metalloxid und Metallpigment, insbesondere Zinkpigment oder Zinkpigment und Aluminiumpigment, bereits in Schichtdicken im unteren µm-Bereich Stahl nicht nur im direkten Kontakt mit der metallischen Stahloberfläche, sondern auch bei der Applikation auf die beim Glühen aus der Verzunderungsschutzbeschichtung entstehende Reaktionsschicht und insbesondere im Verbund mindestens zweier unterschiedlicher Stahlbauteile wirkungsvoll vor Korrosion schützen. Hierbei wird ein sehr widerstandsfähiger Kantenschutz des Bauteils erreicht und die Korrosionsschutzschicht kann zudem problemlos überlackiert, phosphatiert oder tauchlackiert werden, insbesondere im KTL-Verfahren.

Eine Ausbildung der Erfindung besteht darin, daß das Glühen bei einer Temperatur über 850°C erfolgt.

Das Glühen der härtbaren Stähle erfolgt üblicherweise im gas- oder elektrisch betriebenen Glühofen, es ist erfindungsgemäß auch vorgesehen, dass das Glühen konduktiv oder induktiv erfolgen kann.

Eine vorteilhafte Ausgestaltung der Erfindung besteht darin, daß der Sauerstoffgehalt in der Atmosphäre des Glühofens 0-10 % beträgt.

Das Zusammenfügen der Bauteile zu einem Verbund kann insbesondere Schweißen, Kleben, Bördeln, Schrauben oder Nieten erfolgen, wobei aber grundsätzlich jedes form- oder kraftschlüssige Fügeverfahren Anwendung finden kann.

Im Rahmen der Erfindung liegt auch, daß die Verzunderungsschutzschicht aus einer Aluminiumlegierung, einer aluminium-pigmenthaltigen Beschichtung oder einer zink- oder zinkpigmenthaltigen Beschichtung besteht.

Ebenfalls zur Erfindung gehörig ist, daß die Verzunderungsschutzschicht und/oder das fertige Bauteil nach dem Umformungsprozeß einen elektrischen Widerstand von maximal 10 mOhm, vorzugsweise von maximal 5 mOhm, aufweist.

Die beiden vorstehenden Maßnahmen stellen sicher, dass ein Widerstandpunktschweißen möglich ist.

Weiterhin ist es zweckmäßig, daß die Korrosionsschutzschicht im Spritz-, Flut-, Walz- oder Tauchverfahren auf die geglühte Reaktionsschicht aufgebracht wird.

Hierbei ist erfindungsgemäß vorgesehen, daß die Schichtdicke der Korrosionsschutzschicht weniger als 50 µm, bevorzugt weniger als 20 µm und besonders bevorzugt weniger als 10 µm beträgt.

Es liegt im Rahmen der Erfindung, daß die Korrosionsschutzschicht vor dem Auftragen mit Lösungsmitteln verdünnt wird.

Bei einer Ausbildung der Erfindung ist vorgesehen, daß die Korrosionsschutzschicht nach dem Aufbringen bei einer Temperatur zwischen Raumtemperatur und 400°C, bevorzugt zwischen Raumtemperatur und 250°C, getrocknet wird.

Im Rahmen der. Erfindung ist vorgesehen, daß die Korrosionsschutzschicht ein Bindemittel und metallisches Pigment enthält.

In diesem Zusammenhang hat es sich als vorteilhaft erwiesen, daß die Korrosionsschutzschicht zwischen 10 und 100 Gew.-%, bevorzugt zwischen 50 und 100 Gew.-% und besonders bevorzugt zwischen 70 und 95 Gew.-% metallisches Zinkpigment enthält.

Weiterhin ist in diesem Zusammenhang zweckmäßig, daß die Korrosionsschutzschicht bis zu 30 Gew.-% metallisches Aluminiumpigment enthält.

Eine bevorzugte Ausgestaltung der Erfindung besteht darin, daß das in der Korrosionsschutzschicht verwendete Bindemittel 5 bis 100 Gew.-% Metalloxide, insbesondere Titan-, Aluminium- oder Zirkonoxide, enthält.

Zur Erfindung gehörig ist auch, daß das in der Korrosionsschutzschicht verwendete Bindemittel bis zu 50 Gew.-% über den Sol-Gel-Prozeß hergestelltes Bindemittel, Silikone, Siloxane oder Wachse enthält.

Ebenfalls ist im Rahmen der Erfindung vorgesehen, daß die Korrosionsschutzschicht Festkörperschmierstoffe, insbesondere Graphit oder Bornitrid, enthält.

Ein besonders vorteilhafter Aspekt des erfindungsgemäßen Verfahrens besteht darin, daß die Korrosionsschutzschicht den elektrischen Widerstand des Stahlsubstrates nicht maßgeblich beeinträchtigt.

Erfindungsgemäß ist weiterhin vorgesehen, daß die Korrosionsschutzschicht in üblichen Verfahren überlackiert, phosphatiert oder tauchlackiert wird, insbesondere im KTL-Verfahren.

Schließlich besteht eine Weiterbildung der Erfindung darin, daß statt eines Karosseriebauteils eine aus mehreren miteinander verbundenen Karosseriebauteilen aus Stahl bestehende Karosserie behandelt wird.

Es hat sich im Rahmen der Ereindung herausgestellt, daß es mit dem erfindungsgemäßen Verfahren auch möglich, ist, eine komplette Karosserie, bestehend aus einer Vielzahl von miteinander (durch Schweißen, Kleben, Fügen, Bördeln, Nieten, etc.) verbundenen Karosseriebauteilen mit einem aktiven Korrosionsschutz zu versehen. Hierbei kann sowohl ein zuverlässiger Kantenschutz ermöglicht werden, als auch der zusätzliche Arbeitsgang der Wachsbehandlung, bei der ca. 5 bis 6 kg Wachs aufgetragen werden, eingespart werden. Dies ist auch dann möglich, wenn die verschiedenen Karosseriebauteile aus unterschiedlichen Stählen bzw. unterschiedlich behandelten Stählen, z.B. aus sandgestrahltem Stahl, kaltverformten, heißyerformten, nicht gehärtetem oder gehärtetem Stahl oder Edelstahl bestehen. Selbstverständlich kommt auch Hydroforming als Formgebungsverfahren in Frage. Anschließend kann die Karosserie mit einer Lackierung versehen werden. Durch die erfindungsgemäße Beschichtung werden Schweißnähte und Fehlstellen versiegelt.

Nachfolgend wird die Erfindung anhand von Ausführungsbeispielen beschrieben.

### Beispiel 1

In einer Bandbeschichtungsanlage wird ein Beschichtungsmaterial gemäß der WO 2007/076766 A2 bei einer Bandgeschwindigkeit von 60 m/min auf ein entfettetes 22MnB5 Stahlband aufgewalzt und bei einer PMT (Peak Metal Temperature) von 200-250°C ausgehärtet. Das beschichtete Stahlband wird in Platinen geeigneter Größe geschnitten und im Kaltumformverfahren zu einem Vorformteil vorgezogen. Das Vorformteil wird in einem elektrisch betriebenen Durchlaufofen unter Stickstoffatmosphäre mit einem Sauerstoffanteil von maximal 10 Vol% während einer Durchlaufzeit von 4 min auf eine Temperatur von 950°C erwärmt, ins Umformwerkzeug überführt und dort warm umgeformt und durch Abkühlen auf 200°C innerhalb 20s gehärtet.

Eine geeignete Korrosionsschutzbeschichtung zur die beschriebenen formgehärteten Teile wird folgendermaßen hergestellt:
23,6 g einer Aluminiumpigmentpaste (z.B. Decomet Hochglanz, A1 1002/10, Fa Schlenk), 138,1 g einer Zinkpigmentpaste (Stapa TE Zinc AT, Fa Eckart) werden zu 74,4 g des Lösemittels 1-Butanol unter Rühren zugegeben und mit einem Dissolver 20 min mit 1000 U/min homogen eindispergiert. 163,3 g Tetrabutylorthotitanat (Fa. Fluka) werden zu dieser Lösung unter Rühren zugegeben. Vor der weiteren Verarbeitung werden dem Ansatz 5 g eines Netzmittels vom Typ Byk 348 (Fa. Byk Chemie) zugesetzt.

Die Beschichtungslösung wird mit einer Lackierpistole (z.B. Sata HVLP mit 1,2 mm Düse) allseitig deckend auf das formgehärtete Teil auflackiert, so dass nach der Trocknung und Aushärtung eine Schichtdicke von 3-10 µm erhalten wird. Die Aushärtung erfolgt während 20 min bei einer Temperatur von 180°C.

### Beispiel 2

Aus wie in Beispiel 1 beschriebenen mit Verzunderungsschutzschicht formgehärteten Bauteilen wird vor dem Auftragen der Korrosionsschutzbeschichtung gemeinsam mit Bauteilen aus blankem Stahlblech durch Widerstandspunktschweißen eine Karosserie zusammengefügt.

Eine geeignete Korrosionsschutzbeschichtung für diesen Verbund wird folgendermaßen hergestellt:
138,1 g einer Zinkpigmentpaste (Stapa TE Zinc AT, Fa Eckart) werden zu 400 g des Lösemittels 1-Butanol unter Rühren zugegeben und mit einem Dissolver 20 min mit 1000 U/min homogen eindispergiert. 163,3 g Tetrabutylorthotitanat (Fa. Fluka) werden zu dieser Dispersion unter Rühren zugegeben.

Eine Mischung aus 40 g Methyltriethoxysilan (Fluka) und 10 g Tetraethoxysilan (Fluka) wird durch Zugabe von 15 g 1%iger Orthophosphorsäure unter Rühren hydrolysiert. Nach 5 h Rühren ist das Reaktionsgemisch einphasig und wird unter Rühren zu der vorgenannten Dispersion gegeben und homogen eingerührt.

Die Beschichtungslösung wird in ausreichender Menge zur Füllung eines geeigneten gerührten Tauchbeckens hergestellt. Die Karosserie wird mit Hilfe eines Krans in das mit Beschichtungslösung gefüllte Tauchbecken eingetaucht und nach homogener Benetzung der gesamten Oberfläche aus dem Tauchbecken gehoben. Überschüssige Beschichtungslösung wird abtropfen gelassen und die Karosserie anschließen in einen Ofen überführt, wo die Beschichtung während 20 min bei 180°C ausgehärtet wird. Danach wird die Karosserie der Phosphatierung und KTL Beschichtung überführt.

### Beispiel 3

Aus Stahlplatinen mit Al-Si-Schmelztauchüberzug und gemäß der WO 2007/076766 A2 beschichteten Stahlplatinen werden durch Formhärten Karosserieteile hergestellt. Diese werden mit Bauteilen aus blankem Stahl durch Widerstandspunktschweißen zu einem Verbund bzw. zu einer Teilkarosserie zusammengefügt.

Eine geeignete Korrosionsschutzbeschichtung für diesen Verbund wird folgendermaßen hergestellt:
Zu 250 g des Lösemittels 1-Butanol werden 33,0 g eines Aluminiumoxidpulvers (z.B. Aeroxide Alu C, Fa. Degussa), 41,3 g eines Zinkpulvers (z. B. Standart Zink Flake AT, Fa. Eckart) und 4,5 g Aerosil R 972 (Fa Degussa) gegeben und mit einem Dissolver 20 min mit 1000 U/min homogen eindispergiert. Vor der weiteren Verarbeitung werden zu dem Ansatz 20 g eines geeigneten Wachses in Pulverform (z.B. Licowax C, Fa. Clariant) zugegeben und ebenfalls mit einem Dissolver während mindestens 2 Stunden homogen eindispergiert.

Die Beschichtungslösung wird mit einer Lackiereinrichtung (z.B. HVLP-Druckluftdüsen mit 1,2 mm Durchmesser) allseitig deckend auf den Verbund auflackiert, so dass nach der Trocknung und Aushärtung eine Schichtdicke von 3-10 µm erhalten wird. Die Lösung wird insbesondere auch in Hohlräume, Spalten und Fugen eingespritzt. Die Aushärtung erfolgt während 20 min bei einer Temperatur von 180°C. Die Teilkarosserie kann über übliche Fügeverfahren mit anderen Metallteilen zu einer Karosserie zusammengefügt werden.

### Ergebnis

Die Karosseriebauteile, Karosserien und Verbunde aus den Beispielen 1-3 sind jeweils mit einer 3-10 µm dicken silbrig-grauen Korrosionsschutzschicht überzogen, die fest auf dem Substrat haftet. Die Beschichtung zeigt bei Auslagerung in einem Salzsprühnebeltest nach DIN EN ISO 9227 nach 1000 h sowohl auf der Fläche als auch im Schadenskreuz keine Rotrostbildung. Die beschichteten Bauteile und Verbunde besitzen einen elektrischen Widerstand von <10 mOhm und können mit anderen Stahlteilen verschweißt werden. Üblicherweise anhängende Verfahrensschritte, wie Phosphatierung und KTL Beschichtung, aber auch die Lackierung beispielsweise durch einen Pulverlack können problemlos durchgeführt werden.

## Patentansprüche

1. Verfahren zum Korrosionsschutz von Karosserie-, Fahrwerks-, Motorbauteilen oder Abgasanlagen aus Stahl, **gekennzeichnet durch** die folgenden Prozeßschritte:
a. Verwendung von im Karosserie- und Fahrzeugbau üblicherweise verwendeten Stahllegierungen oder mit metallischen Überzügen oder metallpigmenthaltigen Beschichtungen oder mit solchen Beschichtungen zum Zwecke des Zunderschutzes versehenen warm umgeformten oder formgehärteten Karosserie-, Fahrwerks-, Motorbauteilen oder Abgasanlagen,
b. Zusammenfügen von mindestens zwei sich in Zusammensetzung, durchlaufenes Verfahren oder Oberflächenbeschichtung unterscheidende Karosserie-, Fahrwerks-, Motorbauteile oder Teilen von Abgasanlagen durch übliche Fügeverfahren zu einem Verbund, wobei mindestens eines der zu dem Verbund zusammengefügten Bauteile ein warm umgeformtes oder formgehärtetes Bauteil ist,
c. Aufbringen einer Korrosionsschutzbeschichtung auf den Verbund, wobei die Korrosionsschutzbeschichtung mindestens 10 Gew.-% metallisches Zinkpigment und bis zu 30 Gew.-% metallisches Aluminiumpigment sowie ein Bindemittel aus 5 bis 100 Gew.-% Metalloxiden enthält, naßchemisch mit einer Schichtdicke von weniger als 20 µm auf die beim Glühen aus der Verzunderungsschutzbeschichtung entstehende Reaktionsschicht aufgebracht wird.

2. Verfahren gemäß Anspruch 1, **dadurch gekennzeichnet, daß** das Zusammenfügen der Bauteile durch Schweißen, Kleben, Bördeln, Schrauben oder Nieten erfolgt.

3. Verfahren gemäß Anspruch 1, **dadurch gekennzeichnet, daß** die Verzunderungsschutzschicht aus einer Aluminiumlegierung, einer aluminium-pigmenthaltigen Beschichtung oder einer zink- oder zinkpigmenthaltigen Beschichtung besteht.

4. Verfahren gemäß Anspruch 1, **dadurch gekennzeichnet, daß** das fertige Bauteil nach dem Umformungsprozeß einen elektrischen Widerstand von maximal 10 mOhm, vorzugsweise von maximal 5 mOhm, aufweist.

5. Verfahren gemäß Anspruch 1, **dadurch gekennzeichnet, daß** die Korrosionsschutzschicht im Spritz-, Flut-, Walz- oder Tauchverfahren auf die geglühte Reaktionsschicht aufgebracht wird.

6. Verfahren gemäß Anspruch 5, **dadurch gekennzeichnet, daß** die Schichtdicke der Korrosionsschutzschicht weniger als 10 µm beträgt.

7. Verfahren gemäß Anspruch 5, **dadurch gekennzeichnet, daß** die Korrosionsschutzschicht vor dem Auftragen mit Lösungsmitteln verdünnt wird.

8. Verfahren gemäß Anspruch 1, **dadurch gekennzeichnet, daß** die Korrosionsschutzschicht nach dem Aufbringen bei einer Temperatur zwischen Raumtemperatur und 400°C, bevorzugt zwischen Raumtemperatur und 250°C, getrocknet wird.

9. Verfahren gemäß Anspruch 1, **dadurch gekennzeichnet, daß** die Korrosionsschutzschicht zwischen 50 und 100 Gew.-% und bevorzugt zwischen 70 und 95 Gew.-% metallisches Zinkpigment enthält.

10. Verfahren gemäß Anspruch 1, **dadurch gekennzeichnet, daß** die Metalloxide in dem Bindemittel Titan-, Aluminium- oder Zirkonoxide sind.

11. Verfahren gemäß Anspruch 1, **dadurch gekennzeichnet, daß** das in der Korrosionsschutzschicht verwendete Bindemittel bis zu 50 Gew.-% über den Sol-Gel-Prozeß hergestelltes Bindemittel, Silikone, Siloxane oder Wachse enthält.

12. Verfahren gemäß Anspruch 1, **dadurch gekennzeichnet, daß** die Korrosionsschutzschicht Festkörperschmierstoffe, insbesondere Graphit oder Bornitrid, enthält.

13. Verfahren gemäß einem der Ansprüche 1 bis 12, **dadurch gekennzeichnet, daß** statt eines Karosseriebauteils eine aus mehreren miteinander verbundenen Karosseriebauteilen aus Stahl bestehende Karosserie behandelt wird.

## Claims

1. Process for protecting steel vehicle body components, chassis components, engine components or exhaust systems from corrosion, **characterised by** the following steps:
a. use of alloy steels routinely employed in body and vehicle construction or of hot-formed or press-hardened vehicle body components, chassis components, engine components or exhaust systems provided with metallic coatings, metal-pigment-containing coatings or anti-scaling coatings.
b. joining - by means of standard joining processes - of at least two body, chassis, engine or exhaust-system components that differ in terms of composition, the process undergone or the surface coating to form a composite part, at least one of the components joined to form the said composite part being a hot-formed or press-hardened component.
c. application of an anti-corrosion coating to the composite part, the anti-corrosion coating containing at least 10 wt. % metallic zinc pigment, up to 30 wt. % metallic aluminium pigment and a binder comprising 5 to 100 wt. % metal oxides, said anti-corrosion coating being applied by means of a wet-chemical process, in a coating thickness of less than 20 µm, to the reactive layer that forms from the anti-scaling coating during annealing.

2. Process according to claim 1, **characterised in that** the components are joined by means of welding, bonding, flanging, bolting or riveting.

3. Process according to claim 1, **characterised in that** the anti-scaling layer consists of an aluminium alloy, an aluminium-pigment-containing coating or a coating containing zinc or zinc pigment.

4. Process according to claim 1, **characterised in that** after the forming process, the finished component has a maximum electrical resistance of 10 milliohms, preferably a maximum of 5 milliohms.

5. Process according to claim 1, **characterised in that** the ant-corrosion layer is applied to the annealed reactive layer by spraying, flooding, roll coating or dip coating.

6. Process according to claim 5, **characterised in that** the thickness of the anti-corrosion layer is less that 10 µm.

7. Process according to claim 5, **characterised in that** the anti-corrosion layer is diluted with solvents prior to application.

8. Process according to claim 1, **characterised in that** following application, the anti-corrosion layer is dried at a temperature between room temperature and 400 °C, preferably between room temperature and 250 °C.

9. Process according to claim 1, **characterised in that** the anti-corrosion layer contains between 50 and 100 wt. %, preferably between 70 and 95 wt. % metallic zinc pigment.

10. Process according to claim 1, **characterised in that** the metal oxides in the binder are titanium, aluminium or zirconium oxides.

11. Process according to claim 1, **characterised in that** the binder used in the anti-corrosion layer contains up to 50 wt. % binder produced via the sol-gel process, silicones, siloxanes or waxes.

12. Process according to claim 1, **characterised in that** the anti-corrosion layer contains solid lubricants, in particular graphite or boron nitride.

13. Process according to one of the claims 1 to 12, **characterised in that**, instead of one vehicle body component, a vehicle body consisting of a plurality of steel body components joined together is treated.

## Revendications

1. Procédé pour protéger de la corrosion des composants de carrosserie, de châssis, de moteur ou de circuit de gaz d'échappement en acier, **caractérisé par** les étapes de procédé suivantes :
a. utilisation d'alliages d'acier habituellement utilisés dans la construction des carrosseries et des véhicules, ou de composants de carrosserie, de châssis, de moteur ou de circuit de gaz d'échappement formés à chaud ou trempés sous presse qui sont pourvus d'un revêtement métallique ou d'un revêtements contenant des pigments métalliques ou de revêtements de ce type destinés à la protection contre l'oxydation,
b. assemblage, à l'aide de procédés d'assemblage courants, d'au moins deux composants de carrosserie, de châssis, de moteur ou d'éléments de circuits d'échappement se distinguant dans leur composition, par le procédé parcouru ou par le revêtement de surface, afin de former un composite, au moins un des composants assemblés pour former le composite étant un composant formé à chaud ou trempé sous presse,
c. application d'un revêtement de protection contre la corrosion sur le composite, le revêtement de protection contre la corrosion contenant au moins 10 % en poids de pigment de zinc métallique et jusqu'à 30 % en poids de pigment d'aluminium métallique ainsi qu'un liant composé de 5 à 100 % en poids d'oxydes métalliques, et étant déposé par voie chimique humide avec une épaisseur de couche inférieure à 20 µm sur la couche de réaction formée lors du recuit à partir du revêtement de protection contre l'oxydation.

2. Procédé selon la revendication 1, **caractérisé en ce que** l'assemblage des composants est réalisé par soudage, collage, sertissage, vissage ou rivetage.

3. Procédé selon la revendication 1, **caractérisé en ce que** la couche de protection contre l'oxydation est constituée par un alliage d'aluminium, un revêtement contenant des pigments d'aluminium ou un revêtement contenant du zinc ou des pigments de zinc.

4. Procédé selon la revendication 1, **caractérisé en ce que** la pièce finie après l'opération de formage présente une résistance électrique de 10 mOhms au maximum, de préférence de 5 mOhms au maximum.

5. Procédé selon la revendication 1, **caractérisé en ce que** la couche de protection contre la corrosion est déposée sur la couche de réaction recuite par un procédé de pulvérisation, d'écoulement, de laminage ou d'immersion.

6. Procédé selon la revendication 5, **caractérisé en ce que** l'épaisseur de la couche de protection contre la corrosion est inférieure à 10 µm.

7. Procédé selon la revendication 5, **caractérisé en ce que** la couche de protection contre la corrosion est diluée avec des solvants avant l'application.

8. Procédé selon la revendication 1, **caractérisé en ce que** la couche de protection contre la corrosion est séchée après le dépôt à une température comprise entre la température ambiante et 400 °C, de préférence entre la température ambiante et 250 °C.

9. Procédé selon la revendication 1, **caractérisé en ce que** la couche de protection contre la corrosion contient entre 50 et 100 % en poids et de préférence entre 70 et 95 % en poids de pigment de zinc métallique.

10. Procédé selon la revendication 1, **caractérisé en ce que** les oxydes métalliques contenus dans le liant sont des oxydes de titane, d'aluminium ou de zirconium.

11. Procédé selon la revendication 1, **caractérisé en ce que** le liant utilisé dans la couche de protection contre la corrosion contient jusqu'à 50 % en poids de liant préparé par le procédé sol-gel, de silicone, de siloxane ou de cire.

12. Procédé selon la revendication 1, **caractérisé en ce que** la couche de protection contre la corrosion contient des lubrifiants solides, en particulier du graphite ou du nitrure de bore.

13. Procédé selon l'une des revendications 1 à 12, **caractérisé en ce qu'**au lieu de traiter une pièce de carrosserie, on traite une carrosserie composée de plusieurs composants de carrosseries en acier assemblés ensemble.
